# EUROPEAN PATENT APPLICATION

(11) **EP 0 707 985 A2**
(43) Date of publication of application: **24.04.1996**
(21) Application number: 95307465.5
(22) Date of filing: 19.10.1995
(51) Int. Cl.: B60C 15/028, B60C 17/06

(54) **Device for retaining vehicle tyre**

(30) Priority: 21.10.1994 AR 32984294
(71) Applicant: Oks, Lili Feld, Oro 2996 Capital (1425) (AR); Oks, Ricardo Miguel, Oro 2996 Capital (1425) (AR)
(72) Inventor: Oks, Ricardo Miguel, Capital (1425) (AR)
(74) Representative: Austin, Hedley William

(57) **Abstract**

The device is a flexible ring-shaped body to retain the tyre bead 4 on a wheel. The body has a central annular portion 100 of substantially constant cross-section and a plane of symmetry XX', and radially outwardly extending protrusions having slightly flexible tips. The annular portion 100 is substantially undeformable under compound compression and bending stresses, its inside diameter 102 being adjustably seated over the central zone of wheel well 1. There are a pair of annular wings 200 which project in inclined manner from annular portion 100 from adjacent to the base of same up to the corresponding side of the space in the tyre.

## Description

The present invention relates to a device which permits a vehicle to continue rolling and which acts against tyre damage in the event of a total or partial loss of the air from the interior of the tyre.

It is known that when a tyre loses the air contained in its interior, the tyre deflates and flattens.

Modern automobiles are equipped with tubeless tyres of relatively broad footprint, so that an automobile driver is confronted with two potential problems, as follows:
(a) deflation of a tubeless tyre is not always noticed in due time, so that the tyre casing continues rolling in its flattened condition, causing the wheel to press against the fabric of the tyre, cutting and damaging it beyond repair; and
(b) still more dangerous is the possibility of a sudden loss of air in tubeless tyres (for example, in a blowout or broken bead), which may have fatal consequences at relatively high speeds, and in the case of a broken bead, an accident is inevitable if the tyre does not have a tube.

"Broken bead" or "unshoeing" is the phenomenon caused when the tyre becomes detached from the edge of the wheel rim. When this occurs, the air in the interior is instantly lost, sometimes accompanied by a complete separation of the tyre from the wheel rim.

Various constructions and solutions to the problem caused by loss of air from a tubeless tyre are known in the art. Partial solutions to the problem, aimed at keeping a damaged and at least partially deflated tubeless tyre rolling, are as follows:
(a) Continuous injection of air from a compressor (or source of air under pressure) permanently connected to the tyre. This solution only deals with problems caused by small punctures or very gradual losses of air; it is very costly, and even then may involve separation from the rim when the vehicle is at high speed.
(b) Introduction of sealing solutions within the tyre. This approach is also useful for dealing with gradual losses of air, such as a puncture, but it does not solve the problems associated with multiple punctures, cuts, blowouts etc. and broken beads.
(c) Introduction of a diaphragm inside the tyre, which acts as a kind of inner tube. Argentinian patent AR 133987 clearly exemplifies this solution, but it does not solve the broken bead problem.
(d) Use of a rigid body of smaller diameter than the inflated tyre, and of greater diameter than that of the rim on which the tyre is placed. When the wheel deflates, the vehicle rests on this rigid body. The difficulties encountered are low mechanical resistance; difference in ground movement, because such a body tends to become fixed, and because it is rigid, it does not match the elasticity of the tyre and results in impact damage to the vehicle shock absorbers.
(e) Insertion of a number of gas cartridges capable of being activated when the wheel deflates inside the chamber. This solution, proposed by Dunlop of the U.K., serves only for relieving the difficulties of limited punctures.

The present invention provides a partially flexible device to be located in the interior of the tubeless tyre of an automobile and connected to the wheel rim, so as to protect the tyre from deterioration caused by the wheel rim when the tyre deflates, making it possible for the vehicle to continue rolling, with a tyre profile similar to that of a partially inflated tyre, even when all the air contained in its interior has been lost, and avoiding cutting action by the edge of the wheel rim on the tyre.

The present invention accordingly provides a device to be located on a wheel within a tubeless tyre for maintaining the integrity of the tyre on deflation thereof, which device comprises an annular body to be seated around the circumference of a wheel, in the annular space between the tyre and the circumferential well of the wheel and respective rims of the wheel, said annular body comprising a substantially rigid body member having projecting from each lateral edge thereof a flexible wing portion arranged to extend from the well towards a portion of the tyre spaced therefrom, each wing portion having on its outer edge an annular protrusion arranged to cause engagement of the respective beads of the tyre with the corresponding rim of the wheel, each wing portion having a tip arranged to separate facing internal parts of the internal wall of the tyre when the latter is folded on deflation of the tyre, the radial extent of the body member being greater than the sum of the depth of the well of the wheel and two thicknesses of the sidewall of the tyre.

The tubeless tyre has a "doughnut-shaped" space in the inflated state, whereas in its deflated state it has side walls folded over themselves between the tread and the bead. The device according to the invention, when located within the tyre, is permanently connected to the wheel rim, and has an annular protrusion of constant cross-section. The body member includes a central nucleus which is substantially undeformable under compound bending and compression stresses, whose inside diameter is adjustably positioned over the central zone (or well) of the wheel. The body member has an obliquely rising projecting wing at each edge of the central nucleus, from adjacent to the base of same up to the corresponding lateral edge, each of the wings being flexibly deformable up to the tyre side wall and with a substantially equal length interposed into the space defined by the folded side walls of the tyre in uninflated state, resulting in a tyre in uninflated state whose side walls define a curvature whose height is greater than that of the wheel rim. Each has a projecting ring-shaped edge at the side, the tyre bead being interposed and enclosed between the projecting edge and the wheel rim, in the uninflated tyre. The height of the central body member is greater than the height of the sum of the wheel rim and the thickness of the fold of the uninflated tyre side wall (two side wall thicknesses).

In one embodiment, it is preferred that the body member further comprises a pair of spaced annular portions, of which the edges are at least partly flexible, the remainder of the body member being substantially rigid.

An embodiment of the present invention will now be described, by way of example only, with reference to the accompanying drawings, in which;
Figure 1 shows in section, in its left part, an inflated tubeless tyre mounted on a wheel, with an exemplary device according to the present invention in an inoperative position, and in the right part of the same drawing, the section of the uninflated tyre, with the device in operative position; and
Figure 2 shows a partially sectioned inflated tyre in perspective, with the device of Figure 1 in its interior.

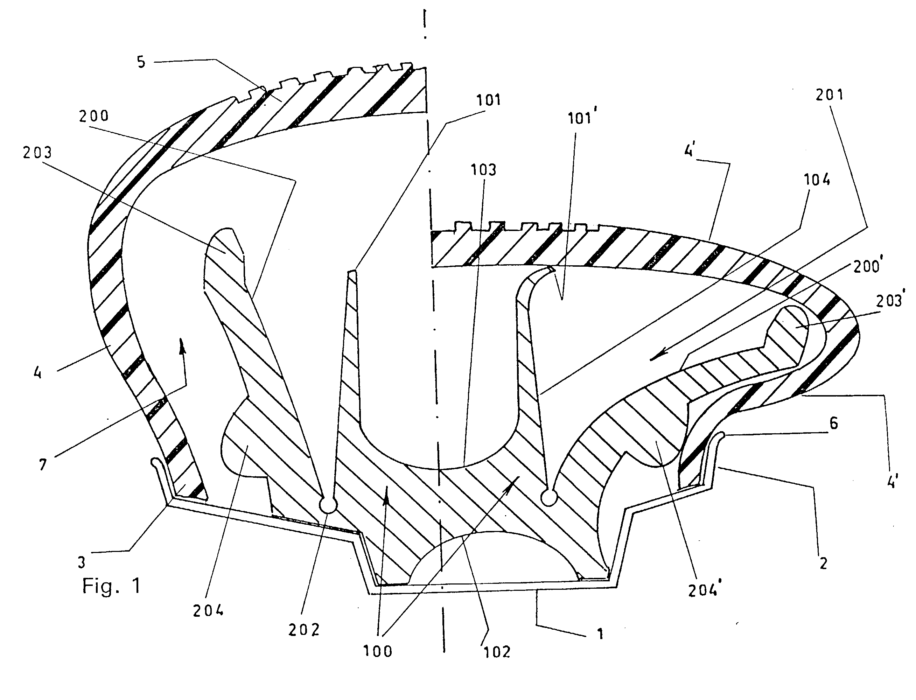

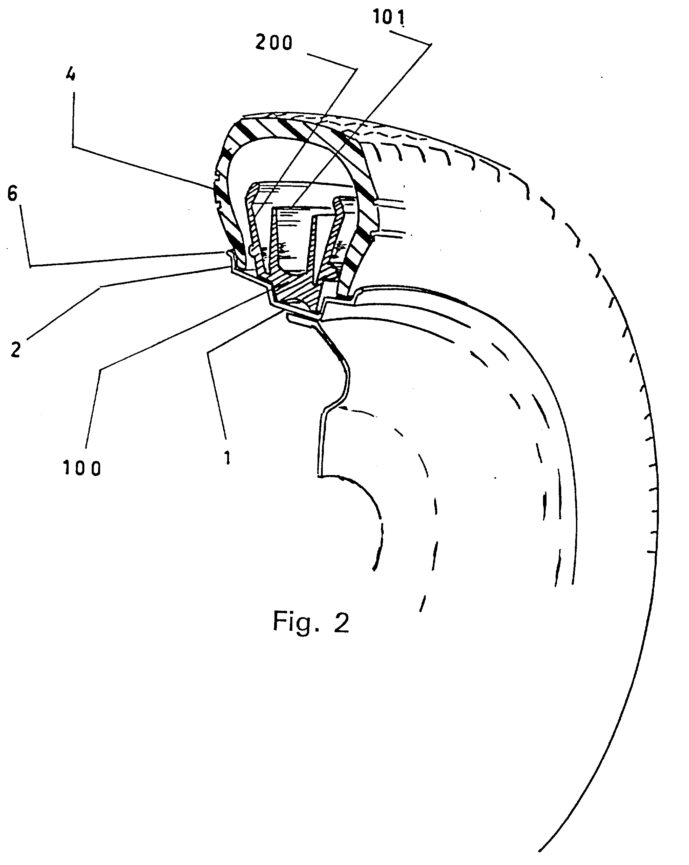

Reference will now be made to the drawings, and initially to Figure 1. Like parts are denoted by like reference numerals in Figures 1 and 2; in Figure 1 the reference numerals are in some cases qualified by an apostrophe (') to represent the deflated condition (see the right side of the drawing). Where there is no apostrophe, this represents the inflated condition (see the left side of the drawing).

The drawings show a wheel having a median circumferential well 1 and a pair of opposed circumferential rims 2. Seated on the wheel is a tyre 4 having a tread portion 5 and a pair of beads 3, each of which abuts a respective rim 2.

Seated within the volume defined by the tyre is a flexible ring-shaped body permanently connected to the bead 4, which body comprises a central annular body 100 of substantially constant cross-section. This annular body 100 has a plane of substantial symmetry XX' and has radially outwardly extending protrusions having tips 101 which are slightly flexible. The annular body 100 is substantially undeformable under compound compression and bending stresses, its inside diameter 102 being adjustably seated over the central zone of wheel well 1. To relieve the weight and to provide correct load distribution, it is suitable for the annular body to have an external annular trough 103 from which extend a pair of annular ridge members 104, the free ends 101 of which are partially flexible. The remainder of this annular body 100 is substantially rigid. A pair of annular wings 200 project in inclined manner from annular body 100 from adjacent to the base of same up to the corresponding side of the space in the tyre. Each of the wings 200 is flexibly deformable up to the tyre bead 3. A substantially equal length is disposed in the space defined by the folded side walls of the tyre 4' in uninflated state.

Each wing 200 has a spin axis at its union 202 with the side of annular body 100. Wings 200 are elastically deformable and provide a body of thickness such that, on being interposed in space 201, they avoid flattening of the tyre and cause the tyre to adopt a curvature in its side walls 4' such as to prevent the edge 6 of the side of rim 2 from cutting it like a knife, which would otherwise take place.

End 203 of the wing preferably has an annular protrusion which increases the curvature of the fold of side 4'.

The present invention resolves the problem of bead bending or unshoeing of the tyre.

When a tyre loses its air, this currently causes its beads 3 to detach from rim 2, which contributes to the rapid destruction of the tyre casing. The present invention resolves this problem, by creating a wedge between the wing and the bead 3.

Figure 1 shows wing 200 at rest (inflated tyre) in its left part. The wing presents ring-shaped edge 204 which, when the wing bends downward (see the right part of Figure 1), causes this ring-shaped edge 204' to press bead 3 of the tyre firmly against rim 2.

According to the present invention, the tyre bead is retained to wheel rim 1 by annular body 100 located within the tubeless tyre, which is then inflated.

While the tyre remains inflated, the device according to the invention does not alter the functioning and response characteristics of the tyre.

When a puncture occurs, the profile of the tyre becomes flattened, as is shown in the right part of Figure 1 and, according to the present invention, sides 4' fold, enclosing wing 20 in their interior. The wing is flexible and bends along an annular fold line 202. The annular wing 200 has a thickness sufficient to avoid vibration during the normal movement of the tyre and sufficiently thin to permit its continuous flexible elastic deformation. It may have a ring-shaped thickened edge 203 at its free end, which allows folds 4' of the side of the tyre wall to attain a thickness and curvature sufficient to make sure that the free edge 6 of the wheel rim does not cut the fabric of the wall.

In its turn, central annular body 100 has a height such as to permit the inside surface of the tyre wall to rest against projections from the body providing sufficient support and height such as to guarantee a curvature in the side wall of the tyre.

All this is achieved without interfering with the assembly of the wheel and tyre, because the width of the device is such as to leave a space 7 at each side free when the tyre is in place.

The action provided by ring-shaped edge 204 creates a wedge which holds the internal side of bead 3 of the tyre wall against ring 2 of the rim, when it is most necessary to exert a uniform force against the same.

It is known that the danger for tubeless tyres is their bead breaking or unshoeing when they lose air. The present invention avoids this by creating a uniform, annular wedging force, created by part 204 rotating in 204' and pressing from above downward and sideward on the tyre wall.

## Claims

1. A device to be located on a wheel within a tubeless tyre for maintaining the integrity of the tyre on deflation thereof, which device comprises an annular body to be seated around the circumference of a wheel, in the annular space between the tyre and the circumferential well of the wheel and respective rims of the wheel, said annular body comprising a substantially rigid body member having projecting from each lateral edge thereof a flexible wing portion arranged to extend from the well towards a portion of the tyre spaced therefrom, each wing portion having on its outer edge an annular protrusion arranged to cause engagement of the respective beads of the tyre with the corresponding rim of the wheel, each wing portion having a tip arranged to separate facing internal parts of the internal wall of the tyre when the latter is folded on deflation of the tyre, the radial extent of the body member being greater than the sum of the depth of the well of the wheel and two thicknesses of the sidewall of the tyre.

2. A device according to claim 1, wherein the body member comprises a pair of spaced annular portions, of which the edges are at least partly flexible, the remainder of the body member being substantially rigid.

3. A device according to claim 1 or 2, wherein the device, when located within the tyre is permanently connected to the wheel rim and has an annular protrusion of constant cross-section.

4. A device according to any preceding claim, wherein the body member comprises a central nucleus which is substantially undeformable under compound binding and compression stresses, and whose inside diameter is adjustably positioned over the well.

5. A device according to any preceding claim, wherein the tip of each wing portion comprises an annular protrusion arranged to increase the curvature of the tyre in the undeflated state.
